# EUROPÄISCHE PATENTANMELDUNG

(11) **EP 2 601 841 A1**
(43) Veröffentlichungstag der Anmeldung: **12.06.2013**
(21) Anmeldenummer: 12008134.4
(22) Anmeldetag: 05.12.2012
(51) Int. Cl.: A01N 65/00, C12C 3/08, C12C 3/12

(54) **Verfahren zum Herstellen eines Mittels mit Hopfen**

(30) Priorität: 05.12.2011 DE 102011120058
(71) Anmelder: Obermeier - Widmann GbR, 84419 Schwindegg (DE)
(72) Erfinder: Widmann, Christine, 92318 Neumarkt (DE); Obermeier, August, 84419 Schwindegg (DE)
(74) Vertreter: Rothkopf, Ferdinand

(57) **Zusammenfassung**

Ein Verfahren zum Herstellen eines Mittels mit Hopfen, das zum Bekämpfen von pflanzenschädigenden Organismen verwendet werden soll, bei dem folgende Schritte durchgeführt werden: Bereitstellen eines Hopfen-Wasser-Gemisches, Kochen des Hopfen-Wasser-Gemisches, Lagern des gekochten Hopfen-Wasser Gemisches und Abfiltrieren des Hopfen-Wasser-Gemisches. Dabei bildet das Filtrat nach dem Abfiltrieren das Mittel mit Hopfen.

## Beschreibung

### Hintergrund der Erfindung

Die Erfindung betrifft ein Verfahren zum Herstellen eines Mittels mit Hopfen, das zum Bekämpfen von pflanzenschädigenden Organismen verwendet werden soll, bei dem folgende Schritte durchgeführt werden: Bereitstellen eines Hopfen-Wasser-Gemisches und Kochen des Hopfen-Wasser-Gemisches. Ferner betrifft die Erfindung ein Mittel zum Bekämpfen von pflanzenschädigenden Organismen, das ein Kochextrakt aus Hopfen und Wasser enthält. Darüber hinaus betrifft die Erfindung eine Verwendung eines derartigen Mittels zum Bekämpfen von pflanzenschädigenden Organismen.

Als pflanzenschädigende Organismen treten unterschiedliche Organismen auf. Derartige weit verbreitete Organismen sind vor allem Viren, Bakterien und Pilze sowie darüber hinaus tierische Schädlinge, wie beispielsweise Nematoden, Schnecken, Milben und Insekten, insbesondere Pflanzenläuse.

Die genannten Organismen schädigen Pflanzen auf verschiedene Art und Weise. Viren, Bakterien und Pilze können insbesondere Erreger von Pflanzenkrankheiten sein. Tierische Schädlinge können auf die Pflanzen unterschiedlich schädigend wirken. Hervorgehoben werden sollen hier als tierische Schädlinge die Insekten, die allgemein die artenreichste Tiergruppe auf der Erde bilden. In der Gruppe der Insekten treten als Pflanzenschädlinge beispielsweise Wanzen, Zikaden und Pflanzenläuse, insbesondere Blattläuse auf. Derartige Insekten beeinflussen die Pflanzen vor allem durch ein Aussaugen des Pflanzensaftes. Die einzelne Pflanze wird dadurch in ihrem Wachstum erheblich gehindert und geschwächt. Werden Kulturpflanzen geschwächt, kann ein nicht unerheblicher wirtschaftlicher Schaden auftreten. Zudem ist gerade im Zier-, Garten- und Zimmerpflanzenbereich das umweltverträgliche Bekämpfen von tierischen Schädlingen, insbesondere von Blattläusen an Rosengewächsen, ein Problem, das es zu lösen gilt.

Herkömmlich werden Schädlinge in der Regel mit Pflanzenschutzmitteln, insbesondere mit Nematiziden, Fungiziden, Akariziden und Insektiziden bekämpft, die aufwändig und kostspielig entwickelt und hergestellt werden. Dabei muss als wichtiger Gesichtspunkt die Umweltverträglichkeit des einzelnen Pflanzenschutzmittels beachtet werden, damit ein ökologischer Schaden weitgehend vermieden wird.

### Zugrundeliegende Aufgabe

Der Erfindung liegt die Aufgabe zugrunde, ein kostengünstiges und umweltverträgliches Mittel zur Bekämpfung von pflanzenschädigenden Organismen bereitzustellen.

### Erfindungsgemäße Lösung

Diese Aufgabe ist erfindungsgemäß mit einem Verfahren zum Herstellen eines Mittels mit Hopfen, das zum Bekämpfen von pflanzenschädigenden Organismen verwendet werden soll, gelöst, bei dem folgende Schritte durchgeführt werden: Bereitstellen eines Hopfen-Wasser-Gemisches, Kochen des Hopfen-Wasser-Gemisches, Lagern des gekochten Hopfen-Wasser Gemisches und Abfiltrieren des Hopfen-Wasser-Gemisches. Dabei bildet das Filtrat nach dem Abfiltrieren das Mittel mit Hopfen. Ferner ist die Aufgabe erfindungsgemäß mit einem Mittel zum Bekämpfen von pflanzenschädigenden Organismen, das ein Kochextrakt aus Hopfen und Wasser enthält, gelöst, bei dem das Kochextrakt Iso-Alphasäuren umfasst. Darüber hinaus ist die Aufgabe erfindungsgemäß mit einer Verwendung eines derartigen Mittels zum Bekämpfen von pflanzenschädigenden Organismen gelöst.

Hopfen (Humulus) ist eine Pflanzengattung in der Familie der Hanfgewächse (Cannabaceae), in der die weit verbreitetste Pflanzenart in dieser Pflanzengattung der Echte Hopfen (Humulus lupulus) ist.

Die einzelne Hopfenpflanze ist eine Schlingpflanze. Insbesondere umfasst die einzelne Hopfenpflanze des Echten Hopfens einen winterharten Wurzelstock beziehungsweise Rhizom. Aus diesem Rhizom treiben im Frühjahr zahlreiche Pflanzenstängel aus, die sich im Laufe des Sommers nach oben schlingen und dabei Blätter sowie Blütenstände ausbilden. Die Blütenstände unterscheiden sich je nach botanischem Geschlecht, das heißt, dass die männliche Pflanze einen anderen Blütenstand hat, als die weibliche Pflanze. Nur die weibliche Pflanze wird kultiviert, da nur deren Blütenstände wichtige Inhaltsstoffe umfassen, die als Rohstoffe weiter genutzt werden können. Dazu werden die Blütenstände bei der Ernte im Spätsommer mit den Stängeln abgeschnitten und anschließend von den Stängeln getrennt. Nur die Blütenstände werden nachfolgend in einer Darre getrocknet, dann gepresst und gekühlt. Oftmals werden sie nachfolgend zu Pellets beziehungsweise Hopfenpellets weiterverarbeitet, um eine längere Haltbarkeit zu erzielen. Die derart gewonnenen Bestandteile des Hopfens werden hauptsächlich für eine Bierherstellung und in geringerem Ausmaß für eine Anwendung in der Medizin, insbesondere als Beruhigungsmittel, genutzt.

Die Blütenstände der weiblichen Pflanze sind als zapfenartige Ähren ausgebildet, den sogenannten Hopfenzapfen beziehungsweise Hopfendolden. Die einzelne Hopfendolde umfasst dabei einen Stiel, der die Hopfendolde mit dem Pflanzenstängel verbindet. Am Stiel befindet sich eine Spindel in Form einer zickzackförmigen Achse. An jeder Biegung der Achse sitzen unscheinbare Blüten mit großen Deckblättern, die zapfen- und schuppenförmig angeordnet sind. Zwischen den großen Deckblättern und der Spindel bilden sich in Vorblättern Hopfendrüsen oder Drüsenbecher. In diesen Hopfendrüsen reichern sich Sekrete wie Harze, insbesondere Weich- und Hart-Harze sowie ätherische Öle an, die eine gelbe, klebrige Masse, das sogenannte Lupulin, bilden. Insbesondere das Lupulin umfasst wertvolle Inhaltsstoffe, die für die besonderen Eigenschaften des Hopfens verantwortlich sind.

Nachfolgend werden die wichtigsten Inhaltsstoffe des Hopfens und deren Eigenschaften näher erläutert, sofern sie für die erfindungsgemäße Lösung maßgeblich sind.

Besonders wertvolle Inhaltsstoffe stellen im Harz die sogenannten Hopfenbitterstoffe beziehungsweise Hopfensäuren dar, die insbesondere für den bitteren Geschmack des Hopfens verantwortlich sind. Zu den Hopfensäuren zählen Humulone, beziehungsweise α-Hopfenbittersäuren, die verkürzt als Alphasäuren bezeichnet werden. Strukturchemisch betrachtet weisen die Humulone zwei Dimethylallylseitenketten auf. Darüber hinaus zählen zu den Hopfensäuren die mit den Humu-Ionen strukturchemisch verwandten Lupulone, beziehungsweise β-Hopfensäuren, die sogenannten Betasäuren, die drei Dimethylallylseitenketten aufweisen.

Allgemein erzeugen die genannten Hopfensäuren einen bitteren Geschmack und wirken insbesondere sedierend und konservierend, insbesondere antimikrobiell, das heißt bakterizid, antiviral und/oder fungizid. Sie werden als natürliche Biostabilisatoren besonders bevorzugt in der Bierherstellung eingesetzt.

Ferner sind die ätherischen Öle des Hopfens, das sogenannte Hopfenöl, besonders wertvoll, da sie vor allem für das Aroma und den herben Geruch und/oder Geschmack des Hopfens verantwortlich sind. Diese ätherischen Öle setzen sich aus mindestens 200 bis 250 Einzelkomponenten zusammen, von denen zu den Hauptkomponenten folgende Verbindungen zählen: Mono- und Sesquiterpene, wie Myrcen, Humulen, β-Caryophyllen, 2-Undecanon und Farnesene, insbesondere β-Farnesen. Dabei wird β-Farnesen in der Natur von Blattläusen als Alarmpheromon beziehungsweise Alarmbotenstoff freigesetzt, um andere Blattläuse zu warnen.

Als weitere wertvolle Inhaltsstoffe sind im Hopfen verschiedene monomere und polymere Polyphenole vorhanden. Insbesondere polymere Polyphenole wirken als Gerbstoffe. Ein Gerbstoff ist dabei allgemein ein Stoff, der sich bei Kontakt mit Eiweißen beziehungsweise Proteinen mit diesen verbindet. Die Ursache hierfür liegt in der chemischen Struktur der Gerbstoffe und der Eiweiße. Gerbstoffe beinhalten als Polyphenole mehrere Hydroxylgruppen in ihrer chemischen Struktur. Diese Hydroxylgruppen sind funktionelle Gruppen und können in Wechselwirkung mit funktionellen Gruppen anderer Moleküle treten, wodurch chemische Bindungen gebildet werden können. Als funktionelle Gruppen werden in der Chemie allgemein reaktionsfreudige Molekülgruppen in organischen Verbindungen bezeichnet. Derartige funktionelle Gruppen sind beispielsweise Amino-, Carboxy-, Carbamoyl-, Sulfanyl- und Phenylgruppen, die insbesondere in Eiweißen vorkommen. Eiweiße beziehungsweise Proteine werden auf diese Weise insbesondere zusätzlich vernetzt, insbesondere quer vernetzt. Die Vernetzung bewirkt zum einen in unstrukturierten Eiweißen, wie beispielsweise Hühnereiweiß, eine Denaturierung beziehungsweise Ausfällung. In strukturierten Eiweißen wird deren Struktur beziehungsweise deren räumlicher Aufbau weitgehend erhalten und zusätzlich stärker vernetzt. Dieser Vorgang wird auch als Prozess der Gerbung bezeichnet. Damit wird die chemische Struktur von Eiweißen derart verändert, dass ein Abbau durch Mikroorganismen zumindest gehemmt wird, da die Mikroorganismen insbesondere die veränderte Struktur nicht mehr erkennen können. Zudem kann auf diese Weise ein Gewebe oberflächlich verdichtet werden. Ferner wird in den Eiweißen gebundenes Wasser durch die Gerbstoffe verdrängt, was zu einer Entwässerung führt. Zusammengefasst wirken Gerbstoffe also keimhemmend, insbesondere bakterizid und fungizid sowie austrocknend. Darüber hinaus werden biologisch aktive Eiweiße, wie beispielsweise Enzyme, durch die Gerbstoffe, wie beschrieben, in ihrer Struktur verändert. Damit werden die biologisch aktiven Eiweiße denaturiert und können zumindest nicht mehr in der Art und Weise wie vorher biologisch aktiv sein.

Pflanzliche Gerbstoffe, die auch im Hopfen vorkommen, werden als Tannine beziehungsweise Tannoide bezeichnet. Tannine sind chemisch gesehen Phenole und Hydroxyphenole, insbesondere nieder- bis mittelmolekulare Polyphenole und Polyhydroxyphenole, insbesondere Polymere von Catechinen und Anthocyanen. Mit den Tanninen schützen sich verschiedene nährstoffreiche Pflanzen vor Fressfeinden, dadurch dass die Tannine wohl weitgehend die Verdauung der Fressfeinde derart beeinflussen, dass sie Eiweiße wie beschrieben deaktivieren.

Darüber hinaus können Tannoide empfindliche Eiweiße beziehungsweise Eiweißstoffe in Lösung ausfällen. Dieses Ausfällen wird zum Beispiel bei der Bierherstellung zum Klären von Bier genutzt.

Ferner umfasst das Harz im Hopfen Flavonoide, hier insbesondere monomere Polyphenole, wie das gelb gefärbte Xanthohumol, das ein Chalkon, das heißt ein aromatisches, ungesättiges Keton darstellt und bisher nur im Hopfen nachgewiesen wurde. Xanthohumol dient als Radikalfänger und bietet damit einen Schutz vor freien Radikalen. Damit wirkt Xanthohumol antioxidativ und darüber hinaus antikanzerogen.

Zusammengefasst ergeben sich aus den Wirkungen der Inhaltsstoffe des Hopfens insbesondere folgende Eigenschaften des Hopfens: bitterer Geschmack, antimikrobielle, insbesondere bakterizide, fungizide und antivirale Wirkung sowie austrocknende, sedierende, antioxidative und antikanzerogene Wirkung.

Die genannten bekannten Eigenschaften des Hopfens können überraschenderweise erfolgreich zum Bekämpfen von pflanzenschädigenden Organismen auf Pflanzen verwendet werden. Dazu werden im erfindungsgemäßen Verfahren entsprechende Inhaltsstoffe des Hopfens gewonnen. Die gewonnenen Inhaltsstoffe des Hopfens werden darüber hinaus besonders bevorzugt im erfindungsgemäßen Verfahren zumindest teilweise gezielt verändert, sodass eine Mischung an hocheffizienten Wirkstoffen hergestellt wird.

Im ersten Schritt des erfindungsgemäßen Verfahrens wird dazu ein Hopfen-Wasser-Gemisch bereitgestellt. Dabei wird als Hopfen bevorzugt Echter Hopfen in ursprünglicher Form als Rohhopfen beziehungsweise Naturhopfen verwendet. Auch Hopfenpräparate, bevorzugt in Form von Hopfenpellets, besonders bevorzugt Hopfenpellets vom Typ 90 und/oder Typ 45 werden erfindungsgemäß eingesetzt. Dabei werden bei den Hopfenpellets vom Typ 90 beziehungsweise Typ 45 durch Abtrennen von losen Hopfenbestandteilen, wie Spindeln, und durch anschließende Pelletierung aus 100 kg Rohhopfen 90 kg beziehungsweise 45 kg Hopfenpellets gewonnen. Als weniger vorteilhafte Alternative können auch Hopfenextrakte verwendet werden, wodurch eine deutlich geringere Wirkung erzielt wird. Beim Bereitstellen des Hopfen-Wasser-Gemisches wird eine feste Phase gebildet, die feste Bestandteile des Hopfens, insbesondere in Form von Hopfendolden umfasst. Darüber hinaus wird eine flüssige Phase gebildet, die Wasser und bereits durch das Vermischen mit dem Hopfen weitgehend gelöste Bestandteile des Hopfens umfasst.

Das derart gebildete Hopfen-Wasser-Gemisch wird nachfolgend für eine kurze Zeitdauer aufgekocht.

Beim Aufkochen werden bevorzugt weitgehend alle Harze, insbesondere Weich- und Hartharze isomerisiert. Insbesondere werden die genannten Alphasäuren dabei zu Iso-Alphasäuren isomerisiert. Isomerisieren bedeutet, dass mit den Iso-Alphasäuren Verbindungen entstehen, die zwar die gleiche Art und Anzahl der chemischen Elemente im Molekül umfassen, aber eine andere chemische Struktur als die Alphasäuren aufweisen. Strukturchemisch umfassen die Alphasäuren einen Ring mit sechs Kohlenstoffatomen als Grundgerüst. Dieser Ring beinhaltet fünf sp²-hybridisierte Kohlenstoffatome mit zwei Enol-Einheiten und einer Ketogruppe sowie ein sp³-hybridisiertes Kohlenstoffatom, an dem eine Hydroxylgruppe gebunden ist. Beim Isomerisieren bildet sich durch Ringverengung aus dem genannten Ring ein Ring mit fünf Kohlenstoffatomen als Grundgerüst. Der dann gebildete Ring umfasst drei sp²-hybridisierte Kohlenstoffatome mit einer Enol-Einheit und einer Ketogruppe und zwei sp³-hybridisierte Kohlenstoffatome. An einem der sp³-hybridisierten Kohlenstoffatome ist dabei eine Hydroxylgruppe gebunden, die auf zwei verschiede Arten räumlich angeordnet sein kann. Damit werden zumindest zwei verschiedene Iso-Alphasäuren gebildet, die sogenannten cis- und trans-Isomere, insbesondere cis- und trans-Isohumulone. Die derart hergestellten Iso-Alphasäuren sind insbesondere für einen besonders bitteren Geschmack und eine besonders große biologische Stabilisierung mittels derer antimikrobieller Wirkung verantwortlich.

Je länger gekocht wird, desto höher ist der erreichte Isomerisierungsgrad, das heißt, desto mehr verfügbare Alphasäuren werden in Iso-Alphasäuren umgesetzt.

Die Bezeichnung Alphasäuren umfasst vorliegend außer α-Humulon alle α-Hopfenbittersäuren, die sich vom α-Humulon durch unterschiedliche Seitenketten am C2-Atom des genannten Kohlenstoffringes ableiten. Dazu gehören insbesondere Cohumulon, Adhumulon, Prähumulon und Posthumulon.

Dabei wird α-Humulon auch als n-Humulon beziehungsweise α-Lupulinsäure bezeichnet. Gemäß IUPAC-Nomenklatur handelt es sich hier um (6R)-3,5,6-Trihydroxy-4,6-bis(3-methyl-2-butenyl)-2-(3-methyl-1-oxobutyl)-2,4-cyclohexadien-1-on mit der chemischen Summenformel C₂₁H₃₀O₅ (IUPAC bedeutet "International Union of Pure and Applied Chemistry".). N-Humulon weist damit als Seitenkette am C2-Atom des Kohlenstoffringes eine 3-Methyl-1-Oxobutyl-Gruppe auf. Cohumulon besitzt dort stattdessen eine 2-Methyl-1-Oxopropyl-Gruppe, Adhumulon dementsprechend eine 2-Methyl-1-Oxobutyl-Gruppe, Prähumulon eine 4-Methyl-1-Oxopentyl-Gruppe und Posthumulon eine 1-Oxopropyl-Gruppe.

Beim erfindungsgemäßen Kochen bilden sich aus den genannten Alphasäuren durch die beschriebene Ringverengung die entsprechenden trans- und cis-Iso-Alphasäuren. Diese Iso-Alphasäuren umfassen analog zu ihren Ausgangsstoffen insbesondere die trans- und cis-Isomere des Iso-n-Humulons, Iso-Cohumulons, Iso-Adhumulons, Iso-Prähumulons und Iso-Posthumulons. Iso-n-Humulon wird gemäß IUPAC-Nomenklatur als 3,4-Dihydroxy-5-(3-methyl-2-butenyl)-2-(3-methyl-1-oxobutyl)-4-(4-methyl-1-oxo-3-pentenyl)-2-cylcopenten-1-on bezeichnet. Die weiteren genannten Iso-Alphasäuren unterscheiden sich davon jeweils entsprechend ihren Ausgangsstoffen durch die jeweilige unterschiedliche Seitenkette, die weiterhin am C2-Atom auch des gebildeten Ringes mit fünf Kohlenstoffatomen gebunden ist.

Beim Kochen wird ein pH-Wert von 6,5 bis 8,0, bevorzugt von 6,7 bis 7,7 und besonders bevorzugt von 7,0 bis 7,5 eingestellt, um optimale Reaktionsbedingungen für ein besonders weitgehendes Isomerisieren zu schaffen.

Darüber hinaus wird beim Kochen zumindest ein Großteil der ätherischen Öle des Hopfens aus dem Hopfen ausgekocht und in die flüssige Phase gebracht. Wichtig ist hier, dass nicht zu lange aufgekocht wird, damit die ätherischen Öle sich nicht verflüchtigen. Die in die flüssige Phase gebrachten ätherischen Öle umfassen dabei bevorzugt mindestens einen Stoff aus mindestens einer der folgenden Stoffgruppen: Monoterpene, Sesquiterpene, Terpenalkohole, sonstige Ester, Aldehyde und Ketone sowie oxidierte Sesquiterpene. Zu den Monoterpenen zählen vorliegend bevorzugt Myrcen, Pinene, insbesondere α-Pinen und β-Pinen sowie Limonen. Als Sesquiterpene dienen insbesondere Aromadendren, α-Caryophyllen und β-Caryophyllen beziehungsweise Humulen, α-Selinen und β-Selinen sowie Farnesene, insbesondere β-Farnesen. Zur Stoffgruppe der Terpenalkohole zählt bevorzugt Linalool und zur Stoffgruppe der oxidierten Sesquiterpene bevorzugt Caryophyllenoxid. Zur Stoffgruppe der sonstigen Ester, Aldehyde und Ketone ist insbesondere 2-Methyl-3-Buten-2-ol zu rechnen.

Das gekochte Hopfen-Wasser-Gemisch lässt man nach dem Aufkochen vorzugsweise abkühlen und bevorzugt bei Raumtemperatur, insbesondere bei etwa 16 °C bis 24 °C, bevorzugt bei etwa 18 °C bis 22 °C sowie besonders bevorzugt in einem geschlossenen Behälter einige Zeit stehen. Das bedeutet, dass ein Lagern des gekochten Hopfen-Wasser-Gemisches erfolgt, bei dem sich die gebildete flüssige Phase über einem Bodensatz von ausgekochten festen Bestandteilen des Hopfens, insbesondere der Hopfendolden, wie Spindeln und Blattteilen befindet. Damit werden bevorzugt im Hopfen vorhandene Polyphenole, bevorzugt polymere Polyphenole, insbesondere Gerbstoffe ausgelaugt, sodass ein besonders großer Anteil der Polyphenole von der festen Phase in die flüssige Phase übergeht. Darüber hinaus werden beim Lagern bevorzugt weitere erfindungsgemäß wirksame Bestandteile des Hopfens in die flüssige Phase überführt.

Nachfolgend wird das gelagerte Hopfen-Wasser-Gemisch erfindungsgemäß abfiltriert. Dabei erhält man ein flüssiges Filtrat, das das Mittel mit Hopfen bildet. Zum Bekämpfen von pflanzenschädigenden Organismen wird das gebildete Mittel bevorzugt unverdünnt auf Pflanzen aufgebracht, insbesondere gesprüht. Bei Bedarf wird das Mittel wiederholt auf Pflanzen gesprüht.

Das gebildete Mittel umfasst als Wirkstoffe bevorzugt die genannten, gebildeten Iso-Alphasäuren, ätherischen Öle und Polyphenole, insbesondere Gerbstoffe. Durch die Kombination mindestens zweier dieser erfindungsgemäß gewonnenen, insbesondere hergestellten Wirkstoffe ist ein Mittel geschaffen, das überraschenderweise sehr gut pflanzenschädigende Organismen bekämpft.

Unter anderem liegt die Ursache der Wirkungen darin, dass die Iso-Alphasäuren durch deren bitteren Geschmack pflanzenschädigende Organismen, insbesondere Blattläuse, vertreiben können. Ferner wirken die Iso-Alphasäuren antimikrobiell, wodurch Pilze, Bakterien und Viren vorteilhaft geschädigt, bevorzugt inaktiviert und besonders bevorzugt abgetötet werden können.

Hopfensäuren sind darüber hinaus allgemein und insbesondere auch die genannten Iso-Alphasäuren sehr instabil, sodass durch einen oxidativen Abbau insbesondere 2-Methyl-3-buten-2-ol mit der Halbstrukturformel CH₂=CHC(CH₃)₂OH entsteht. 2-Methyl-3-buten-2-ol ist ein ätherisches Öl, das bereits auch im Hopfenöl vorkommt. 2-Methyl-3-buten-2-ol hat zudem eine sedierende Wirkung auf Organismen. Damit werden die zu bekämpfenden Organismen besonders bevorzugt in ihrer Reaktionsfähigkeit zumindest verlangsamt und eingeschränkt.

Darüber hinaus kann die ölige Konsistenz des 2-Methyl-3-buten-2-ols vorteilhaft ein Verkleben der zu bekämpfenden Organismen bewirken, bevorzugt von deren Atmungsöffnungen und besonders bevorzugt von Atmungsöffnungen von Blattläusen. Besonders vorteilhaft kann damit ein Ersticken der pflanzenschädigenden Organismen erreicht werden.

Weiterhin werden pflanzenschädigende Organismen durch den herben Geruch und/oder Geschmack der ätherischen Öle von den zu bekämpfenden Pflanzen fern gehalten, bevorzugt vertrieben. Insbesondere werden hier Insekten, wie Blattläuse vertrieben.

Ferner können die ätherischen Öle bereits auf den Pflanzen vorhandene, pflanzenschädigende Organismen beim Aufbringen verkleben. Damit können bevorzugt auch mit den ätherischen Ölen die Atmungsöffnungen der pflanzenschädigenden Organismen verklebt werden, womit besonders bevorzugt ebenfalls ein Ersticken der pflanzenschädigenden Organismen erreicht werden kann.

Darüber hinaus bewirken die im Mittel beinhalteten Polyphenole, insbesondere Gerbstoffe eine Veränderung zumindest der Eiweißstruktur auf und in den pflanzenschädigenden Organismen. Diese Veränderung der Eiweißstruktur kann, wie bereits beschrieben, durch Reaktion von in den Gerbstoffen vorhandenen Hydroxylgruppen mit funktionellen Gruppen der Eiweiße erfolgen. Vorteilhaft kann die Veränderung der Eiweißstruktur zum Tod der Organismen führen.

Gerade die Kombination von mindestens zwei der genannten Wirkstoffe ist besonders vorteilhaft, da damit zum einen, wie beschrieben, bevorzugt zunächst ein Sedieren und Schwächen der zu bekämpfenden Organismen erreicht wird. Darüber hinaus ist besonders vorteilhaft eine antimikrobielle Wirkung erzielt und besonders bevorzugt ein Abtöten mittels Verändern der Eiweißstruktur und/oder Ersticken der pflanzenzschädigenden Organismen erreicht.

Insgesamt ist damit erfindungsgemäß ein einfaches, schnelles und kostengünstiges Verfahren zum Herstellen eines Mittels mit Hopfen geschaffen, das zum Bekämpfen von pflanzenschädigenden Organismen eingesetzt werden kann.

In einer vorteilhaften Weiterbildung des erfindungsgemäßen Verfahrens wird das Hopfen-Wasser-Gemisch in einem Volumenverhältnis von Hopfen zu Wasser von 1 zu 4 bis 1 zu 16, bevorzugt von 1 zu 7 bis 1 zu 13 und besonders bevorzugt von 1 zu 10 bereitgestellt. Bei einem derartigen Verhältnis ist vorteilhaft genügend Wasser vorhanden, um besonders viele wirksame Inhaltsstoffe aus dem Hopfen in die flüssige Phase überführen zu können. Darüber hinaus wird derart eine entsprechend hohe Konzentration an Wirkstoffen in der flüssigen Phase eingestellt, mit der nach dem Abfiltrieren und Aufbringen auf die Pflanzen ein besonders gründliches Abtöten von pflanzenschädigenden Organismen erreicht wird.

Ferner wird das Hopfen-Wasser-Gemisch bevorzugt für eine Zeitspanne von 1 bis 10 Minuten, bevorzugt von 2 bis 8 Minuten und besonders bevorzugt von 5 Minuten gekocht. In dieser Zeitspanne wird eine hinreichend große Menge an Alphasäuren zu Iso-Alphasäuren isomerisiert. Ferner werden bevorzugt Betasäuren in Lösung gebracht. Besonders bevorzugt wird zudem ein Großteil der ätherischen Öle in die flüssige Phase überführt. Gleichzeitig wird ein Verflüchtigen der ätherischen Öle besonders vorteilhaft weitgehend vermieden, da das Hopfen-Wasser-Gemisch nur für eine relativ kurze Zeitspanne gekocht wird.

Des Weiteren wird das gekochte Hopfen-Wasser-Gemisch vorzugsweise für eine Zeitspanne von 3 bis 11 Tagen, bevorzugt von 5 bis 9 Tagen und besonders bevorzugt von 7 Tagen gelagert. Beim Lagern des gekochten Hopfen-Wasser-Gemisches wird die beim Kochen gebildete flüssige Phase über den dabei entstandenen Bodensatz von ausgekochten festen Bestandteilen des Hopfens stehen gelassen. Beim Stehenlassen über einen längeren Zeitraum, insbesondere über die genannte Zeitspanne wird vorteilhaft ein besonders großer Anteil der im Hopfen vorhandenen Polyphenole, insbesondere Gerbstoffe in die flüssige Phase überführt, das heißt aus dem Hopfen ausgelaugt. Unter Luftabschluss kann das derart gebildete Hopfen-Wasser-Gemisch auch länger gelagert werden. Andernfalls können oxidative Abbauprozesse einsetzen.

Weiterhin wird in einer vorteilhaften Weiterbildung beim Bereitstellen des Hopfen-Wasser-Gemisches mindestens ein scharfer Stoff zugegeben. Bevorzugt wird als der mindestens eine scharfe Stoff ein scharfes Gewürz, insbesondere Chili, Knoblauch und/oder Pfeffer zugegeben.

Unter einem scharfen Stoff ist ein Stoff im Sinne eines chemischen Stoffes zu verstehen, mit dem ein geschmackliches Schärfegefühl auslösbar ist. Allgemein löst ein derartiger Stoff in Abhängigkeit von der Art des Organismus, insbesondere beim Menschen, aber auch bei bestimmten anderen tierischen Organismen, ein bestimmtes Schmerzempfinden aus. Dazu wirkt der scharfe Stoff auf Rezeptoren, derart, dass er rezeptoreigene Botenstoffe in ihrer Wirkung imitiert. Dabei werden zum einen Wärmerezeptoren aktiviert, die reflektorisch eine Erhöhung der Durchblutung und damit eine Erwärmung des Gewebes auslösen. Zum anderen werden von bestimmten scharfen Stoffen Schmerzrezeptoren aktiviert. Das Aktivieren sowohl der Wärme- als auch der Schmerzrezeptoren führt bevorzugt zu einer vermehrten Ausschüttung von Substanz P, einem Neuropeptid. Diese Substanz P bewirkt allgemein eine starke Erweiterung von Blutgefäßen und steigert eine Durchlässigkeit von Gefäßwänden. So führt insbesondere ein hoher Schärfegrad beispielsweise zu einem Öffnen von Hautporen am ganzen Körper. Zudem hemmen die Inhaltsstoffe vieler scharfer Früchte, insbesondere Gewürze das Wachstum von Bakterien. Die genannten Eigenschaften von scharfen Stoffen werden erfindungsgemäß dazu genutzt, die bereits beschriebenen Effekte der im erfindungsgemäßen Verfahren hergestellten Wirkstoffe zu verstärken. Diese Wirkstoffe, die erfindungsgemäß aus dem Hopfen gewonnen und hergestellt werden, werden im Folgenden auch als Hopfen-Wirkstoffe bezeichnet.

Vorzugsweise wird als der mindestens eine scharfe Stoff Chili verwendet. Im Chili beziehungsweise in Chilischoten sind Capsaicinoide enthalten, die Alkaloide sind und chemisch betrachtet Säureamide darstellen. Die Hauptbestandteile sind hier insbesondere Capsaicin (69%) und Dihydrocapsaicin (22%). Capsaicin wird nach IUPAC-Nomenklatur (E)-N-(4-Hydroxy-3-methoxybenzyl)-8-methyl-6-nonensäureamid benannt und hat die chemische Summenformel C₁₈H₂₇NO₃. Dihydrocapsaicin ist N-(4-Hydroxy-3-methoxybenzyl)-8-methyl-nonansäureamid mit der chemischen Summenformel C₁₈H₂₉NO₃, Die Capsaicinoide sind in Alkohol und Fett löslich sowie praktisch unlöslich in kaltem Wasser. Mittels des erfindungsgemäßen Verfahrens wird Chili nach dem Zugeben zum Hopfen-Wasser-Gemisch mitgekocht. Damit wird insbesondere mittels der hohen Temperatur zumindest ein Großteil insbesondere der Capsaicinoide in die flüssige Phase des gekochten Hopfen-Wasser-Gemisches überführt.

Capsaicinoide, insbesondere Capsaicin wirken stimulierend auf spezifische Schmerzrezeptoren. Der einzelne Schmerzrezeptor umfasst insbesondere einen lonenkanal, der auch bei Erhöhung der Temperatur aktiviert wird. Dieser Ionenkanal ist bevorzugt ein TRP-Kanal (engl.: transient receptor potential), besonders bevorzugt ein TRPV1-Kanal (V1 steht für Vanilloid-Rezeptor 1). Bindet sich nun Capsaicin bevorzugt an den lonenkanal, so wird eine schmerzhafte Erhöhung der Temperatur imitiert. Als Reaktion darauf wirkt der betroffene Organismus der derart erzeugten scheinbaren Temperaturerhöhung durch eine vermehrte Durchblutung von Gewebe zur Wärmeabfuhr entgegen.

Beim Aufbringen des nach dem erfindungsgemäßen Verfahren hergestellten Mittels mit Hopfen und Chili auf die pflanzenschädigenden Organismen verursachen die gewonnen Chili-Wirkstoffe entsprechend vorteilhaft eine beschleunigte und verstärkte Wirkung der Hopfen-Wirkstoffe.

Die beschleunigte und verstärkte Wirkung wird dadurch erzielt, dass TRP-Kanäle als lonenkanäle auch bei Insekten, insbesondere bei der Schmerzwahrnehmung eine wichtige Rolle spielen. Stellen nun insbesondere Insekten die pflanzenschädigenden Organismen dar, so können sich die gewonnenen Chili-Wirkstoffe, insbesondere die Capsaicinoide an TRP-Kanäle binden und damit eine schmerzhafte Erhöhung der Temperatur imitieren. Die betroffenen pflanzenschädigenden Organismen wirken der derart erzeugten scheinbaren Temperaturerhöhung durch eine vermehrte Durchblutung von Gewebe zur Wärmeabfuhr entgegen. Die derart erzeugte vermehrte Durchblutung beschleunigt den Stofftransport durch den einzelnen betroffenen Organismus und damit auch dessen Stoffwechselvorgänge. Mittels der schnelleren Stoffwechseivorgänge werden die entsprechenden Hopfen-Wirkstoffe beschleunigt verstoffwechseit. Damit wird deren Wirkung beschleunigt und die pflanzenschädigenden Organismen werden vorteilhaft besonders schnell geschwächt, besonders vorteilhaft abgetötet.

Darüber hinaus ist eine antibakterielle und fungizide Wirkung der Inhaltsstoffe von Chili bekannt. Die Chili-Wirkstoffe werden gemäß der Erfindung, wie beschrieben, mit den erfindungsgemäß gewonnenen Hopfen-Wirkstoffen kombiniert. Mittels dieser Kombination wird vorteilhaft eine verstärkte antimikrobielle Wirkung gegenüber pflanzenschädigenden Organismen erreicht.

Weiterhin wird als der mindestens eine scharfe Stoff vorzugsweise Knoblauch zugegeben. In Knoblauch kommt die geruchlose Aminosäure Alliin vor. Alliin tritt nach Zerstörung der Zellstruktur von Knoblauch in Kontakt mit einem dort vorhandenen Enzym Alliinase. Mittels des genannten Enzyms wird aus Alliin Allicin gebildet. Allicin wird gemäß IUPAC-Nomenklatur Prop-2-en-1-thiosulfinsäure-S-allylester mit der chemischen Summenformel C₆H₁₀OS₂ bezeichnet. Allicin wirkt als Knoblauch-Wirkstoff insbesondere auf die gleichen Rezeptoren wie die genannten Capsaicinoide, wodurch auch mit frischem Knoblauch ein scharfer Geschmack erreicht wird. Insbesondere im wässrigen Milieu setzt sich Allicin bevorzugt spontan zu Diallylsulfid oder höheren Sulfiden um, die für den typischen Knoblauchgeruch verantwortlich sind. Dieser Knoblauchgeruch vertreibt bevorzugt Pflanzenläuse und besonders bevorzugt Blattläuse. Erfindungsgemäß wirken insbesondere die genannten Knoblauch-Wirkstoffe, bevorzugt der Knoblauchgeruch zusammen mit den Hopfen-Wirkstoffen, insbesondere mit dem durch die ätherischen Öle erzeugten Geruch. Mittels dieses Zusammenwirkens wird die vertreibende Wirkung auf pflanzenschädigende Organismen vorteilhaft erheblich verstärkt.

Darüber hinaus wirkt Allicin allgemein antibakteriell und zytotoxisch, das heißt zellgiftig beziehungsweise zellschädigend, insbesondere zelltötend. Wird der Knoblauch nun in dem erfindungsgemäßen Verfahren zur Herstellung des Mittels mit Hopfen mit den Hopfen-Wirkstoffen kombiniert, so wird deren Wirkung bei der Anwendung potenziert. Damit wird eine besonders gründliche Zerstörung der pflanzenschädigenden Organismen erreicht.

Vorteilhaft wird ferner als der mindestens eine scharfe Stoff Pfeffer zugegeben. Der Pfeffer wird in Form von Pfefferschoten, besonders bevorzugt in Form von Pfefferkugeln zugegeben. Im Pfeffer ist vor allem das Alkaloid Piperin verantwortlich für die Schärfe des Pfeffers. Piperin ist chemisch gesehen ein Piperidin-Alkaloid und gehört zur Gruppe der Säureamid-Alkaloide. Piperin wird auch 1-Piperoylpiperidin oder Piperinsäurepiperidin genannt und hat die chemische Summenformel: C₁₇H₁₉NO₃. Auch der Pfeffer und insbesondere das Piperin regt, wie die genannten scharfen Stoffe, den Stoffwechsel an und zudem eine Sekretion von insbesondere Speichel und weiteren Verdauungssäften. Darüber hinaus wirkt Pfeffer antimikrobiell. Besonders bevorzugt kann Pfeffer die Bioverfügbarkeit von anderen Stoffen erhöhen.

In der bevorzugten Kombination mit den erfindungsgemäß hergestellten Hopfen-Wirkstoffen beschleunigen die Pfeffer-Wirkstoffe den Stoffwechsel der pflanzenschädigenden Organismen, womit ebenfalls die Wirkung der Hopfen-Wirkstoffe beschleunigt wird.

Besonders vorteilhaft werden mindestens zwei scharfe Stoffe kombiniert zugegeben, womit die genannten Wirkungen entsprechend potenziert werden.

In einer weiteren erfindungsgemäßen Lösung ist ein Mittel geschaffen zum Bekämpfen von pflanzenschädigenden Organismen, das ein Kochextrakt aus Hopfen und Wasser enthält, bei dem das Kochextrakt Iso-Alphasäuren umfasst. Als Iso-Alphasäuren werden vorliegend sowohl die trans- als auch die cis-Isomere der Iso-Alphasäuren bezeichnet, die mittels Kochen, wie beschrieben, durch Isomerisieren aus den Alphasäuren des Hopfens hergestellt wurden. Bevorzugt handelt es sich hier um mindestens eine der Alphasäuren n-Humulon, Cohumulon, Adhumulon, Prähumulon und Posthumulon, aus denen jeweils mindestens eine der Iso-Alphasäuren Iso-n-Humulon, Iso-Cohumulon, Iso-Adhumulon, Iso-Prähumulon und Iso-Posthumulon gebildet wurden. Diese gebildeten Iso-Alphasäuren weisen einen besonders bitteren Geschmack auf und wirken bevorzugt antimikrobiell. Mittels Aufbringen des damit hergestellten erfindungsgemäßen Mittels auf Pflanzen werden vorteilhaft, wie bereits beschrieben, besonders effektiv pflanzenschädigende Organismen bekämpft.

Des Weiteren ist vorzugsweise ein Mittel geschaffen, bei dem das Kochextrakt aus Hopfen und Wasser auf einen pH-Wert von 6,5 bis 8,0, bevorzugt von 6,7 bis 7,7 und besonders bevorzugt von 7,0 bis 7,5 eingestellt ist. Vorteilhaft wird damit beim Aufbringen des erfindungsgemäßen Mittels auf die Pflanze der pH-Wert annähernd neutral gehalten. Damit kann die betroffene Pflanze besonders vorteilhaft möglichst schonend und weitgehend ohne Störung des Pflanzenstoffwechsels behandelt werden.

Besonders vorteilhaft umfasst das Kochextrakt erfindungsgemäß ätherische Öle. Bevorzugt wurden die ätherischen Öle beim Kochen in die flüssige Phase des genannten Hopfen-Wasser-Gemisches überführt. Dabei umfassen die ätherischen Öle in der flüssigen Phase besonders bevorzugt mindestens einen Stoff aus mindestens einer der folgenden Stoffgruppen: Monoterpene, Sesquiterpene, Terpenalkohole, sonstige Ester, Aldehyde und Ketone sowie oxidierte Sesquiterpene. Mit den beschriebenen vorhandenen ätherischen Ölen wird nach dem Aufbringen des erfindungsgemäßen Mittels auf die einzelne Pflanze zumindest eine abschreckende Wirkung durch den Geruch der ätherischen Öle auf pflanzenschädigende Organismen erreicht. Bevorzugt wird darüber hinaus eine sedierende Wirkung, insbesondere durch das 2-Methyl-3-Buten-2-ol erzielt.

Weiterhin umfasst das Kochextrakt gemäß der Erfindung Polyphenole. Bevorzugt wurden die Polyphenole mittels des erfindungsgemäßen Kochens des Hopfen-Wasser-Gemisches und des anschließenden Lagerns des Gemisches in dessen flüssige Phase überführt. Derart gewonnen, umfassen die Polyphenole in der flüssigen Phase besonders bevorzugt mindestens einen Stoff aus mindestens einer der folgenden Stoffgruppen: Monomere Polyphenole und polymere Polyphenole. Dabei umfassen die monomeren Polyphenole bevorzugt phenolische Carbonsäuren, wie Benzoesäurederivate und Zimtsäurederivate sowie heterocyclische Carbonsäuren, wie Flavonoide. Zu den Flavonoiden zählen vorliegend insbesondere Catechin, Quercentin, Kämpferol und Xanthohumol. Als polymere Polyphenole dienen vorzugsweise niedermolekulare Polyphenole, wie Procyanidine und besonders bevorzugt höhermolekulare Polyphenole, wie Catechingerbstoffe und Tannine. Insbesondere die polymeren Polyphenole wirken, wie bereits beschrieben, bevorzugt als Gerbstoffe und damit vorteilhaft verändernd und besonders vorteilhaft zerstörend auf Eiweißstrukturen.

Deswegen ist die Erfindung auch auf ein Mittel zum Bekämpfen von pflanzenschädigenden Organismen gerichtet, bei dem das Kochextrakt Gerbstoffe umfasst.

Darüber hinaus umfasst das Kochextrakt besonders vorteilhaft mindestens einen scharfen Stoff. Bevorzugt ist der mindestens eine scharfe Stoff einer der folgenden Stoffe: Capsaicinoide, insbesondere Capsaicin, bevorzugt gewonnen aus Chili und Allicin, Diallylsulfid, höhere Sulfide des Allicins, bevorzugt gewonnen aus Knoblauch sowie Piperin, bevorzugt gewonnen aus Pfeffer. Mit diesem mindestens einen scharfen Stoff wird die Wirkung der bereits genannten Wirkstoffe des erfindungsgemäßen Mittels, wie bereits beschrieben, jeweils entsprechend besonders vorteilhaft verstärkt.

Darüber hinaus wird das erfindungsgemäße Mittel gemäß der Erfindung zum Bekämpfen von pflanzenschädigenden Organismen verwendet. Besonders bevorzugt werden pflanzenschädigende Organismen bekämpft, die sich oberirdisch an Pflanzen, insbesondere auf der Oberfläche der einzelnen Pflanze befinden. Die Oberfläche der einzelnen Pflanze beinhaltet dabei die Oberfläche von Pflanzenblättern und Pflanzenstängeln. Dort siedeln sich unter bestimmten Umgebungsbedingungen pflanzenschädigende Organismen an.

Unter pflanzenschädigenden Organismen sind dabei zum einen insbesondere Mikroorganismen, wie Bakterien, Pilze und/oder Viren zu verstehen. Die Mikroorganismen schwächen die einzelne Pflanze, insbesondere in ihrer Stoffwechselaktivität. Wird auf derart geschwächte Pflanzen das erfindungsgemäße Mittel aufgebracht, so treten die bereits genannten Wirkstoffe in Kontakt und damit in Wechselwirkung mit den Mikroorganismen. Die Mikroorganismen, insbesondere Bakterien werden dadurch mittels der antimikrobiellen Eigenschaften der genannten Wirkstoffe in ihrer Aktivität eingeschränkt, bevorzugt in ihrer Vermehrung gehindert und besonders bevorzugt abgetötet.

Mit dem Bekämpfen, insbesondere dem Abtöten der pflanzenschädigenden Mikroorganismen, wird der Gehalt an Mikroorganismen, insbesondere der Bakterienbeziehungsweise Keimgehalt vorteilhaft erheblich gesenkt. Dadurch kann die einzelne Pflanze ihre Stoffwechselaktivität wieder weitgehend ungehindert entfalten und damit insbesondere ihre Assimilationsleistung erhöhen. Die erhöhte Assimilationsleistung führt dazu, dass die Pflanze insgesamt gestärkt wird, bevorzugt dazu, dass die Pflanze besser wächst und gegebenenfalls stärker blüht.

Als Pflanzenart werden dabei insbesondere Rosengewächse massiv gestärkt. Deswegen ist die Erfindung auch auf eine Verwendung des erfindungsgemäßen Mittels als Pflanzenstärkungsmittel, insbesondere für Rosengewächse gerichtet.

Außer den Mikroorganismen sind als pflanzenschädigende Organismen insbesondere tierische Schädlinge zu verstehen, die die Pflanzen insbesondere durch Fressen oder Saugen schädigen. Derartige Schädlinge sind bevorzugt Spinnentiere, insbesondere Milben und/oder Insekten, insbesondere Pflanzenläuse. Zu den Pflanzenläusen zählen insbesondere auch Schildläuse und Blattläuse. Wird auf mit derartigen Schädlingen befallenen Pflanzen das erfindungsgemäße Mittel insbesondere durch Aufsprühen aufgebracht, so treten die Wirkstoffe des Mittels mit den Schädlingen in Kontakt und üben die bereits genannten bekämpfenden Wirkungen aus. Damit werden vorteilhaft die Schädlinge in ihrer Aktivität eingedämmt und besonders vorteilhaft abgetötet.

Besonders vorteilhaft wird das erfindungsgemäße Mittel gemäß der Erfindung zum Bekämpfen von Blattläusen verwendet. Blattläuse befallen Pflanzen in der Regel an empfindlichen Stellen, insbesondere an jungen Trieben oder Blättern, bei stärkerem Befall auch auf deren Stängel. Dabei sticht die einzelne Blattlaus mit ihrem Saugrüssel in das einzelne Blatt und injiziert damit zum einen ihren Speichel in die Pflanze, was zu Verfärbungen und Aufwölbungen führt. Darüber hinaus zapft die Blattlaus damit gezielt eine einzelne Leitungsbahn der Pflanze an und saugt einen darin enthaltenen Pflanzensaft aus. Dieses Aussaugen führt zu einem Schwächen der Pflanze und zu einer Verkrüppelung der Blätter und/oder Triebe. Bei starkem Blattlausbefall können ganze Pflanzenteile, ja sogar ganze Pflanzen vertrocknen und absterben. Ferner scheidet die einzelne Blattlaus als Stoffwechselprodukt eine klebrige zähe Masse aus, den sogenannten Honigtau, der auf dem einzelnen Blatt klebt. Auf diesem Honigtau siedeln sich vermehrt Pilze an, die die einzelne Pflanze weiter schädigen können. Darüber hinaus kann die einzelne Blattlaus durch ihren Stich ein Eindringen von Viren in die Pflanze ermöglichen und ferner gleichzeitig auch übertragen, sodass gefährliche Virus-Pflanzenkrankheiten entstehen können.

Mit dem Aufbringen, insbesondere Aufsprühen des erfindungsgemäßen Mittels auf mit Blattläusen befallene Pflanzen, treten die Wirkstoffe des erfindungsgemäßen Mittels mit den Blattläusen als Schadorganismus in Kontakt. Dabei wird vorteilhaft mindestens eine der bereits beschriebenen Wirkungen erzielt. Die bereits beschriebenen Wirkungen sind zum einen die sedierende Wirkung, insbesondere des 2-Methyl-3-Buten-2-ols und die Bitterkeit, insbesondere der Iso-Alphasäuren. Ferner vertreiben die ätherischen Öle, insbesondere das β-Farnesen, die einzelne Blattlaus und verkleben darüber hinaus bevorzugt dessen Atmungsöffnungen. Ferner wirken die Polyphenole, insbesondere die Gerbstoffe, Eiweiß verändernd, besonders bevorzugt zerstörend. Damit wird die einzelne Blattlaus vorteilhaft besonders schnell abgetötet. Eine schnellere und verstärkte diesbezügliche Wirkung wird bevorzugt durch ein erfindungsgemäßes Zugeben von scharfen Stoffen erreicht.

Ferner werden eventuell bereits insbesondere durch Blattläuse geförderte, entstandene weiterführende Schäden durch Mikroorganismen wie Viren, Bakterien und/oder Pilze an Pflanzen eingedämmt, da das erfindungsgemäße Mittel eine antimikrobielle Wirkung aufweist.

Darüber hinaus wirkt das erfindungsgemäße Mittel vor allem wegen der vorhandenen ätherischen Öle vertreibend auf noch nicht auf der Pflanze vorhandene Schädlinge, insbesondere Blattläuse, sodass ein Befall von Blattläusen bevorzugt bereits vorbeugend vermieden werden kann.

Zusammenfassend ist gemäß der Erfindung eine einfache, wirksame, umwelt- und menschenverträgliche sowie nachhaltige Bekämpfungsmöglichkeit von Blattläusen geschaffen. Insbesondere im Zier-, Garten- und Zimmerpflanzenbereich ist die erfindungsgemäße Bekämpfung von pflanzenschädigenden Organismen sehr gut anwendbar und kann darüber hinaus vorteilhaft auch in großem Maßstab angewendet werden.

### Kurzbeschreibung der Zeichnungen

Nachfolgend wird ein Ausführungsbeispiel einer erfindungsgemäßen Lösung anhand der beigefügten schematischen Zeichnungen näher erläutert. Es zeigt die Fig. ein Flussdiagramm eines Ausführungsbeispiels eines erfindungsgemäßen Verfahrens.

### Detaillierte Beschreibung des Ausführungsbeispiels

Die Fig. veranschaulicht vereinfacht ein Verfahren 10 zum Herstellen eines Mittels 12 mit Hopfen, das zum Bekämpfen 14 von pflanzenschädigenden Organismen 16 verwendet werden soll. Beim Verfahren 10 wird als erster Schritt ein Bereitstellen 18 eines Hopfen-Wasser-Gemisches 20 durchgeführt. Dazu wird Hopfen 22 in Form von Rohhopfen in einen Behälter gegeben und mit Wasser 24 in Form von Leitungswasser im Volumenverhältnis Hopfen zu Wasser von besonders bevorzugt 1 zu 10 versetzt. Ferner wird ein scharfer Stoff 26, vorliegend in Form von Chilipulver zugegeben.

Alternativ oder zusätzlich wird als scharfer Stoff 26 Knoblauch in Form von zerkleinertem frischen Knoblauch zugegeben. Bevorzugt wird alternativ oder zusätzlich als scharfer Stoff 26 Pfeffer in Form von Pfefferkugeln, besonders bevorzugt in Form von zerkleinerten Pfefferkugeln zugegeben.

Das derart bereitgestellte Hopfen-Wasser-Gemisch 20 umfasst damit eine flüssige und eine feste Phase. In der flüssigen Phase befindet sich Wasser 24 und in geringem Anteil bereits vorgelöste Hopfen-Inhaltsstoffe. In der festen Phase befinden sich Hopfen-Feststoffe, wie Bestandteile der Hopfendolden, insbesondere Spindeln und Blattteile. Das derartige Hopfen-Wasser-Gemisch 20 wird in einem nächsten Schritt 28 für eine Zeitdauer von etwa 5 Minuten gekocht.

Beim Kochen 28 gehen zum einen Alphasäuren in die flüssige Phase in Lösung und werden zu Iso-Alphasäuren 30 isomerisiert. Um ein besonders weitgehendes Isomerisieren zu erreichen, wird beim Kochen 28 ein pH-Wert von 7,0 bis 7,5 eingestellt.

Die gebildeten Iso-Alphasäuren 30 umfassen insbesondere trans- und cis-Isomere des Iso-n-Humulons, Iso-Cohumulons, Iso-Adhumulons, Iso-Prähumulons und Iso-Posthumulons.

Iso-n-Humulon wird gemäß IUPAC-Nomenklatur als 3,4-Dihydroxy-5-(3-methyl-2-butenyl)-2-(3-methyl-1-oxobutyl)-4-(4-methyl-1-oxo-3-pentenyl)-2-cylcopenten-1-on bezeichnet. Iso-Cohumulon ist 3,4-Dihydroxy-5-(3-methyl-2-butenyl)-2-(2-methyl-1-oxopropyl)-4-(4-methyl-1-oxo-3-pentenyl)-2-cylcopenten-1-on. Iso-Adhumulon ist 3,4-Dihydroxy-5-(3-methyl-2-butenyl)-2-(2-methyl-1-oxobutyl)-4-(4-methyl-1-oxo-3-pentenyl)-2-cylcopenten-1-on. Iso-Prähumulon ist 3,4-Dihydroxy-5-(3-methyl-2-butenyl)-2-(4-methyl-1-oxopentyl)-4-(4-methyl-1-oxo-3-pentenyl)-2-cylcopenten-1-on und Iso-Posthumulon ist 3,4-Dihydroxy-5-(3-methyl-2-butenyl)-2-(1-oxopropyl)-4-(4-methyl-1-oxo-3-pentenyl)-2-cylcopenten-1-on.

Ferner gehen beim Kochen 28 des Hopfen-Wasser-Gemisches 20 im Hopfen 22 vorhandene ätherische Öle 32 in die flüssige Phase über, ohne sich mittels der kurzen Kochzeit von etwa 5 Minuten zu verflüchtigen.

Als ätherische Öle 32 liegen nach dem Aufkochen 28 größtenteils folgende Öle in der flüssigen Phase vor: Myrcen, α-Pinen, β-Pinen, Limonen, Aromadendren, α-Caryophyllen, Humulen, α-Selinen, β-Selinen, β-Farnesen, Linalool und Caryophyhllenoxid sowie insbesondere Methyl-3-Buten-2-ol.

Darüber hinaus wird beim Kochen 28 zumindest ein Teil von im scharfen Stoff 26 vorhandenen Wirkstoffen in die flüssige Phase gebracht. In vorliegenden Fall handelt es sich bei dem in die flüssige Phase gebrachten mindestens einen Wirkstoff des scharfen Stoffes 34 um Capsaicinoide, insbesondere Capsaicin beziehungsweise (E)-N-(4-Hydroxy-3-methoxybenzyl)-8-methyl-6-nonensäureamid.

Im Anschluss an das Kochen 28 lässt man das gekochte Hopfen-Wasser-Gemisch 20 langsam abkühlen. Daran anschließend erfolgt ein Lagern 36 des gekochten Hopfen-Wasser-Gemisches 20 bei Raumtemperatur in einem verschlossenen Behälter für etwa 7 Tage.

Beim Lagern 36 wird die gebildete flüssige Phase über einem Bodensatz von ausgekochten festen Bestandteilen des Hopfens 22 wie Spindeln und Blattteilen stehen gelassen. Dabei wird ein besonders großer Anteil von im Hopfen 22 vorhandenen Polyphenolen 38 aus den festen Bestandteilen des Hopfens 22 noch weiter ausgelaugt. Insbesondere wird der Anteil an Gerbstoffen in den Polyphenolen 38 erhöht.

Als Polyphenole 38 liegen folgende Stoffe in der flüssigen Phase vor: Monomere und polymere Polyphenole 38. Als monomere Polyphenole 38 sind phenolische Carbonsäuren, wie Benzoesäurederivate und Zimtsäurederivate sowie heterocyclische Carbonsäuren, wie Flavonoide enthalten. Vorliegende Flavonoide sind Catechin, Quercentin, Kämpferol und Xanthohumol. Als polymere Polyphenole 38 liegen insbesondere Procyanidine, Catechingerbstoffe und Tannine vor. Insbesondere die polymeren Polyphenole 38 wirken als Gerbstoffe.

Im Anschluss an das Lagern 36 wird ein Abfiltrieren 40 der festen Bestandteile des Hopfens 22 von der flüssigen Phase durchgeführt. Das damit gewonnene Filtrat bildet das Mittel mit Hopfen 12 zum Bekämpfen 14 von pflanzenschädigenden Organismen 16. Dabei umfasst das Mittel mit Hopfen 12 die während des Verfahrens 10 in die flüssige Phase überführten und bereits genannten Wirkstoffe Iso-Alphasäuren 30, ätherische Öle 32, in flüssige Phase gebrachte Wirkstoffe des scharfen Stoffes 34 und Polyphenole 38.

Das Mittel 12 wird zum Bekämpfen 14 von pflanzenschädigenden Organismen 16 auf befallene Pflanzen unverdünnt aufgesprüht. Dieses Aufsprühen 14 erfolgt auf einzelne Pflanzen im Zuge einer Einzelpflanzenbehandlung mittels einer geeigneten Sprühvorrichtung. Alternativ erfolgt das Aufsprühen 14 mit einem Pflanzenschutzgerät auf mehrere Pflanzen gleichzeitig.

Als pflanzenschädigende Organismen 16 werden als tierische Organismen besonders effektiv Blattläuse 42 bekämpft. Dazu wird das Mittel 12 unverdünnt auf die einzelne Pflanze, vorliegend auf ein Rosengewächs gesprüht, insbesondere je nach Befallsort auf beziehungsweise unter die einzelnen Blätter. Je nach Bedarf wird das Aufsprühen 14 zwei- bis dreimal wiederholt. Danach ist kein Befall an Blattläusen 42 mehr zu erkennen. Gleichzeitig werden auf den Blättern zusätzlich vorhandene pflanzenschädigende Organismen 16 in Form von schädigenden Mikroorganismen 44 bekämpft. Die Mikroorganismen 44 sind vorliegend überwiegend Bakterien, deren Gehalt auf den Blättern durch Aufsprühen 14 des Mittels 12 erheblich reduziert wird. Als Folge davon ist außer dem Entfernen der Blattläuse 42 zusätzlich eine massive Stärkung der mit dem Mittel 12 behandelten Rosengewächse zu beobachten. Die Rosengewächse wachsen und blühen dadurch vermehrt.

Alternativ wird das Mittel 12 prophylaktisch zum Abwehren von Blattläusen 42 auf die Pflanzen aufgebracht. Gleichzeitig werden damit auf den Blättern vorhandene schädigende Mikroorganismen 44 wie Bakterien, Pilze und Viren bekämpft, womit die einzelne Pflanze gestärkt wird. Bevorzugt kann damit alternativ allein eine Verwendung 46 zum Stärken von Pflanzen des Mittels 12 erfolgen.

Insgesamt ist damit erfindungsgemäß ein einfaches, schnelles und kostengünstiges Verfahren 10 zum Herstellen eines Mittels 12 mit Hopfen geschaffen, das besonders effektiv zum Bekämpfen 14 von pflanzenschädigenden Organismen 16 eingesetzt werden kann. Das Mittel 12 wirkt insbesondere durch den bitteren Geschmack der Iso-Alphasäuren 30 und den herben Geruch der ätherischen Öle 32 vertreibend auf die zu bekämpfenden Organismen 16. Ferner wird mit dem Mittel 12 eine sedierende und schwächende Wirkung auf die zu bekämpfenden Organismen16 erreicht. Darüber hinaus wirkt das Mittel 12 antimikrobiell, wodurch die Mikroorganismen 44 in ihrer Aktivität zumindest eingedämmt, bevorzugt sogar abgetötet werden. Ein Eindämmen und Abtöten von Blattläusen 42 wird mittels der verändernden Wirkung auf die Eiweißstruktur der Blattläuse 42 und/oder verklebenden Wirkung auf die Atmungsöffnungen der Blattläuse 42 erreicht.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Verfahren
- 12: Mittel mit Hopfen
- 14: Bekämpfen mittels Aufsprühen
- 16: pflanzenschädigende Organismen
- 18: Bereitstellen
- 20: Hopfen-Wasser-Gemisch
- 22: Hopfen
- 24: Wasser
- 26: scharfer Stoff
- 28: Kochen
- 30: Iso-Alphasäuren
- 32: ätherische Öle
- 34: mindestens ein Wirkstoff des scharfen Stoffes
- 36: Lagern
- 38: Polyphenole
- 40: Abfiltrieren
- 42: Blattläuse
- 44: Mikroorganismen
- 46: Verwendung zum Stärken von Pflanzen

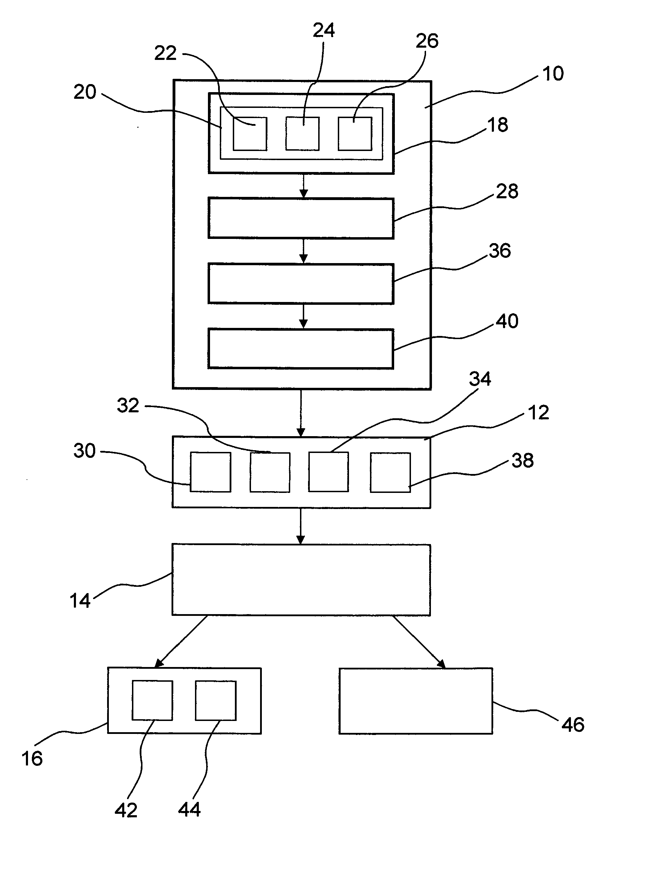

## Patentansprüche

1. Verfahren (10) zum Herstellen eines Mittels (12) mit Hopfen, das zum Bekämpfen (14) von pflanzenschädigenden Organismen (16) verwendet werden soll, bei dem folgende Schritte durchgeführt werden: Bereitstellen (18) eines Hopfen-Wasser-Gemisches (20), Kochen (28) des Hopfen-Wasser-Gemisches (20), Lagern (36) des gekochten Hopfen-Wasser Gemisches (20) und Abfiltrieren (40) des Hopfen-Wasser-Gemisches (20), wobei das Filtrat nach dem Abfiltrieren (40) das Mittel (12) mit Hopfen bildet.

2. Verfahren nach Anspruch 1,
bei dem das Hopfen-Wasser-Gemisch (20) in einem Volumenverhältnis von Hopfen (22) zu Wasser (24) von 1 zu 4 bis 1 zu 16, bevorzugt von 1 zu 7 bis 1 zu 13 und besonders bevorzugt von 1 zu 10 bereitgestellt wird.

3. Verfahren nach Anspruch 1 oder 2,
bei dem das Hopfen-Wasser-Gemisch (20) für eine Zeitspanne von 1 bis 10 Minuten, bevorzugt von 2 bis 8 Minuten und besonders bevorzugt von 5 Minuten gekocht wird.

4. Verfahren nach einem der Ansprüche 1 bis 3,
bei dem das gekochte Hopfen-Wasser-Gemisch (20) für eine Zeitspanne von 3 bis 11 Tagen, bevorzugt von 5 bis 9 Tagen und besonders bevorzugt von 7 Tagen gelagert wird.

5. Verfahren nach einem der Ansprüche 1 bis 4,
bei dem beim Bereitstellen (18) des Hopfen-Wasser-Gemisches (20) mindestens ein scharfer Stoff (26) zugegeben wird.

6. Mittel (12) zum Bekämpfen (14) von pflanzenschädigenden Organismen (16), das ein Kochextrakt aus Hopfen (22) und Wasser (24) enthält,
**dadurch gekennzeichnet, dass** das Kochextrakt Iso-Alphasäuren (30) umfasst.

7. Mittel nach Anspruch 6,
**dadurch gekennzeichnet, dass** das Kochextrakt ätherische Öle (32) umfasst.

8. Mittel nach einem der Ansprüche 6 bis 7,
**dadurch gekennzeichnet, dass** das Kochextrakt Polyphenole (38) umfasst.

9. Verwendung eines Mittels (12) nach einem der Ansprüche 6 bis 8 zum Bekämpfen (14) von pflanzenschädigenden Organismen (16).

10. Verwendung eines Mittels (12) nach Anspruch 9,
zum Bekämpfen (14) von Blattläusen (42).
